# EUROPEAN PATENT APPLICATION

(11) **EP 3 075 812 A1**
(43) Date of publication of application: **05.10.2016**
(21) Application number: 14865394.2
(22) Date of filing: 07.10.2014
(51) Int. Cl.: C09K 3/10, C03C 27/06

(54) **SEALING MATERIAL COMPOSITION AND COMPOSITE GLASS**

(30) Priority: 27.11.2013 JP 2013245160
(71) Applicant: The Yokohama Rubber Company, Limited, Tokyo 105-8685 (JP)
(72) Inventor: KAWAMI, Kaoru, Hiratsuka-shi Kanagawa 254-8601 (JP)
(74) Representative: Dilg, Haeusler, Schindelmann Patentanwaltsgesellschaft mbH
(86) International application number: PCT/JP2014/076834
(87) International publication number: WO 2015/079807

(57) **Abstract**

The present invention provides a sealing material composition which can produce a sealing material having a high durability against UV, heat and humidity as well as having excellent adhesive strength, and a composite glass. A sealing material composition of the present invention comprises: (A) a polymer having two or more thiol groups in a molecule at not less than 10 mass% and not more than 50 mass%; (B) an epoxy-silane coupling agent at not less than 0.05 mass% and not more than 5 mass %; (C) an amino-silane coupling agent at not less than 0.05 mass% and not more than 5 mass%; and (D) a metal oxide at not less than 1 mass% and not more than 10 mass%.

## Description

### Technical field

The present invention relates to a sealing material composition including a silane coupling agent, and relates to a sealing material composition and a composite glass suitable for use as a sealing material of a composite glass, for example.

### Background Art

In recent years, a composite glass with a dual-seal configuration has been used, in which a plurality of glass plates are arranged facing each other via a spacer to form a void layer. In this composite glass with a dual-seal configuration, a first sealing material is filled between each glass plate and the spacer, and a second sealing material is filled in a space outside the spacer between each glass plate.

Conventionally, a polysulfide-based sealing material has been used for the second sealing material for the composite glass. Since the polysulfide-based sealing material does not have a sufficient resistance against UV, heat and humidity, failure of an adhesive layer may occur. Thus, a composition for a sealing material preparation with an improved resistance against UV, heat and humidity has been proposed (e.g. refer to the Patent Document 1). Adhesive strength is improved for this composition compared with a conventional composition, by including a silane coupling agent as a main agent.

### Citation List

### Patent Literature

Patent Document 1: Japanese Unexamined Patent Application No. 2008-127555A

### SUMMARY OF INVENTION

### Technical Problem

However, there are cases where the sufficient adhesive strength is not necessarily achieved even if the composition described in the Patent Document 1 is used, prompting the need for a sealing material having high adhesive strength and durability against UV, heat and humidity.

The present invention was devised in view of above circumstances, and the object of the present invention is to provide a sealing material composition, which can produce a sealing material having a high durability against UV, heat and humidity as well as having excellent adhesive strength, and a composite glass.

### Solution to Problem

A sealing material composition of the present invention comprises: (A) a polymer having two or more thiol groups in a molecule at not less than 10 mass% and not more than 50 mass%; (B) an epoxy-silane coupling agent at not less than 0.05 mass% and not more than 5 mass%; (C) an amino-silane coupling agent at not less than 0.05 mass% and not more than 5 mass%; and (D) a metal oxide at not less than 1 mass% and not more than 10 mass%.

In this sealing material composition, the predetermined amounts of the epoxy-silane coupling agent and the amino-silane coupling agent are included. Therefore, when the sealing material composition produces the sealing material, it is assumed that the thiol groups in the polymer react with the epoxy-silane coupling agent, and an epoxy group of the epoxy-silane coupling agent react with an amino group of the amino-silane coupling agent, while a silanol group of the epoxy-silane coupling agent react with a silanol group of the amino-silane coupling agent, resulting in complex reactions among each component (A) to (C). In addition, the silanol group of the epoxy-silane coupling agent and the silanol group of the amino-silane coupling agent can each form a bond with a functional group (e.g. hydroxyl group) on a surface of a material that is to be an adherend (e.g. glass). These reactions and bonds increase the density of a three-dimensional crosslinked structure of the sealing material compared to that of the conventional sealing material compositions, thereby a sealing material having high adhesive strength and high durability against UV, heat and humidity can be obtained.

In the present sealing material composition, N-2-(aminoethyl)-3-aminopropylmethyldimethoxysilane and/or N-2-(aminoethyl)-3-aminopropyltrimethoxysilane are preferably included as the amino-silane coupling agents.

In the present sealing material composition, the metal oxide is preferably manganese dioxide.

The composite glass of the present invention has a sealing material including the sealing material composition described above.

### Advantageous Effects of Invention

According to the present invention, a sealing material composition, which can produce a sealing material having a high durability against UV, heat and humidity as well as having excellent adhesive strength, and a composite glass are provided.

### Brief Description of Drawings

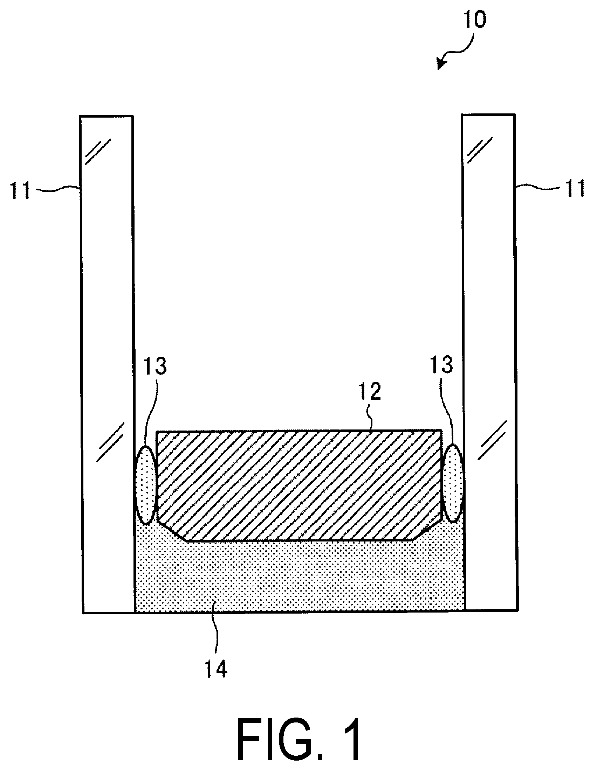

FIG. 1 is a cross-sectional schematic view of a composite glass according to an embodiment of the present invention.

### Description of Embodiments

An embodiment of the present invention will be described below in detail with reference to the attached drawings. Note that the present invention is not limited to the embodiment described below and can be performed with suitable modifications.

A sealing material composition of the present invention comprises a main agent including: (A) a polymer having two or more thiol groups in a molecule; (B) an epoxy-silane coupling agent; and (C) an amino-silane coupling agent; and a curing agent including (D) a metal oxide.

A sealing material composition of the present invention comprises: (A) a polymer having two or more thiol groups in a molecule at not less than 10 mass% and not more than 50 mass%; (B) an epoxy-silane coupling agent at not less than 0.05 mass% and not more than 5 mass%; (C) an amino-silane coupling agent at not less than 0.05 mass% and not more than 5 mass%; and (D) a metal oxide at not less than 1 mass% and not more than 10 mass%.

In the present sealing material composition, the predetermined amounts of the epoxy-silane coupling agent and the amino-silane coupling agent are included. Therefore, when the sealing material composition produces the sealing material, it is assumed that the thiol groups in the polymer react with the epoxy-silane coupling agent, and an epoxy group of the epoxy-silane coupling agent react with an amino group of the amino-silane coupling agent, while a silanol group of the epoxy-silane coupling agent react with a silanol group of the amino-silane coupling agent, resulting in complex reactions among each component (A) to (C). In addition, the silanol group of the epoxy-silane coupling agent and the silanol group of the amino-silane coupling agent can each form a bond with a functional group (e.g. hydroxyl group) on a surface of a material that is to be an adherend (e.g. glass). These reactions and bonds increase the density of a three-dimensional crosslinked structure of the sealing material compared to that of the conventional sealing material compositions, thereby it is assumed that a sealing material having high adhesive strength and high durability against UV, heat and humidity can be obtained. The components of the sealing material composition of the present embodiment are described in detail below.

(A) Polymer having two or more thiol groups in a molecule The polymer having two or more thiol groups in a molecule (also simply referred to a "polymer" hereinafter) is not particularly limited as long as it has two or more thiol groups in a molecule. Examples of the polymer include a polysulfide polymer having a sulfide bond or a polysulfide bond in a molecule. The polysulfide polymer can include an ether bond, an ester bond, an amide bond, or an imide bond in a molecule, for example. Also, the polysulfide polymer can include a functional group such as a thiol group, a hydroxy group and an amino group at the terminal of the molecular chain.

Example of the polysulfide polymer include a polymer having a component unit represented by the formula (1) below in the main chain thereof, and having a thiol group represented by -C₂H₄OCH₂OC₂H₄-SH at the terminal thereof.

-(C₂H₄OCH₂OC₂H₄-S)_{X}- . Formula (1)

(wherein, n is an integer from 1 to 5)

The polysulfide polymer preferably has a flowability at room temperature. The number average molecular weight of the polysulfide polymer is generally not less than 100 and not more than 200,000 and preferably not less than 400 and not more than 50,000.

Also, examples of the polysulfide polymer for use in producing a polysulfide-based sealing material include polysulfide polyether polymer containing a thiol group. Example of the polysulfide polyether polymer containing a thiol group includes a polymer having a polyether part represented by the formula (2) below and a component unit represented by the formula (3) below in the main chain thereof, and having a thiol group represented by the formula (4) below at the terminal thereof.

-(R₁O)ₙ ··· Formula (2)

(wherein R₁ is an alkylene group having from 2 to 4 carbons and n is an integer from 6 to 200)

-C₂H₄OCH₂OC₂H₄-Sx- and -CH₂CH(OH)CH₂-Sx- ·· · Formula (3)

(wherein, x is an integer from 1 to 5)

-C₂H₄OCH₂OC₂H₄-SH and/or-CH₂CH(OH)CH₂-SH ·· · Formula (4)

In the polysulfide polyether polymer, the polyether part in the formula (2) above and the component unit represented by the formula (3) above may be bonded in any arrangement. The ratio may be: (R₁O)ₙ component at 2 mass% to 95 mass%, (C₂H₄OCH₂OC₂H₄Sx) component at 3 mass% to 70 mass%, and (CH₂CH(OH)CH₂Sx) at 1 mass% to 50 mass%.

The number average molecular weight of the polysulfide polyether polymer is generally not less than 600 and not more than 200,000 and preferably not less than 800 and not more than 50,000.

A commercially available product can be used for the polysulfide polymer. Examples of the commercially available polysulfide polymer include Thiokol LP-23, LP-32, and LP-55, manufactured by Toray Fine Chemicals Co., Ltd. Among these, Thiokol LP-32 is preferably used.

The polysulfide polymer described above can be used alone or in combination of two or more kinds.

### (B) Epoxy-silane coupling agent

The epoxy-silane coupling agent is not particularly limited as long as it exhibits the effect of the present invention. Examples of the epoxy-silane coupling agent include γ-glycidoxypropyltrimethoxysilane, γ-glycidoxypropyltriethoxysilane, γ-glycidoxypropylmethyldimethoxysilane, 3,4-epoxycyclohexylethyltrimethoxysilane, 3,4-epoxycyclohexylethyltriethoxysilane, 3,4-epoxycyclohexylethylmethyldimethoxysilane, and the like. One type of these may be used alone, or two or more types of these may be used in a combination. Among these, γ-glycidoxypropyltrimethoxysilane is preferable from the viewpoint of obtaining a sealing material having high durability against UV, heat and humidity.

### (C) Amino-silane coupling agent

A silane coupling agent is added to further improve the adhesion. Examples of the silane coupling agent include the chemicals represented by the formula (5) below.

### [Formula 1]

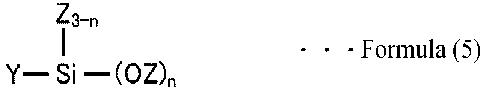

(wherein Y is an alkyl group, an aryl group, an alkoxyalkyl group, or a cycloalkyl group, which can include an -NH₂ group and/or an -NH- bond, and Z is an alkyl group having from 1 to 6 carbons; note that Z can be the same up to 3 or different from each other; n is an integer from 1 to 3)

Examples of the amino-silane coupling agent include silanes containing amino groups such as 3-aminopropyltrimethoxysilane, N-2-(aminoethyl)-3-aminopropylmethyldimethoxysilane, γ-aminopropyltrimethoxysilane, γ-aminopropyltriethoxysilane, γ-aminopropyltriisopropoxysilane, γ-aminopropylmethyldimethoxysilane, 3-(N-phenyl)aminopropyltrimethoxysilane, γ-aminopropylmethyldiethoxysilane, γ-(2-aminoethyl)aminopropyltrimethoxysilane, N-β-(aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(2-(2-aminoethyl)aminoethyl)aminopropyltrimethoxysilane, γ-(6-aminohexyl)aminopropyltrimethoxysilane, N-(2-aminoethyl)-3-aminopropylmethyldimethoxysilane, N-2-(aminoethyl)-3-aminopropyltrimethoxysilane, 3-aminopropyltriethoxysilane, 4-amino-3,3-dimethylbutyltrimethoxysilane, 4-amino-3,3-dimethylbutyldimethoxymethylsilane, 3-(N-ethylamino)-2-methylpropyltrimethoxysilane, N-ethyl-3-amino-2-methylpropyltrimethoxysilane, N-ethyl-3-amino-2-methylpropyldiethoxymethylsilane, N-ethyl-3-amino-2-methylpropyltriethoxysilane, N-ethyl-3-amino-2-methylpropylmethyldimethoxysilane, N-buthyl-3-amino-2-methylpropyltrimethoxysilane, 3(N-methyl-2-amino-1-methyl-1-ethoxy)-propyltrimethoxysilane, N-ethyl-4-amino-3,3-dimethylbutyldimethoxymethylsilane, N-ethyl-4-amino-3,3-dimethylbutyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, and N-vinylbenzyl-γ-aminopropyltriethoxysilane. These amino-silane coupling agent may be used alone, or two or more types of these amino-silane coupling agents may be used in a combination.

From the viewpoint of obtaining a sealing material having high durability against UV, heat and humidity, preferable amino-silane coupling agents among the amino-silane coupling agents described above are at least one type selected from the group consisting of 3-aminopropyltriethoxysilane, 3-aminopropyltrimethoxysilane, N-2-(aminoethyl)-3-aminopropylmethyldimethoxysilane, N-2-(aminoethyl)-3-aminopropyltrimethoxysilane, and 3-(N-phenyl)aminopropyltrimethoxysilane, and more preferable amino-silane coupling agents are at least one type selected from the group consisting of 3-aminopropyltriethoxysilane, 3-aminopropyltrimethoxysilane, and N-2-(aminoethyl)-3-aminopropylmethyldimethoxysilane, N-2-(aminoethyl)-3-aminopropyltrimethoxysilane.

A commercially available product can be used for the amino-silane coupling agent. Examples of the commercially available product of the amino-silane coupling agent include: the products available from Shin-Etsu Silicones under the trade names, "KBM602", "KBM603", and "KBM903"; the products available from Momentive Performance Materials Inc. under the trade names "A-189", "A-1100" and "A-1110"; and the product available from Witco Corp. under the trade name "Y-9669".

Meanwhile, the amino-silane coupling agent may be blocked with a carbonyl compound. Examples of the carbonyl compounds include: ketones such as acetone, methylethylketone, methylisobutylketone, and cyclohexanone; and aldehydes such as acetaldehyde, propionaldehyde, and benzaldehyde.

In particular, for the sealing material composition according to the present invention, neither the silane coupling agent is used alone nor a reaction product of two or more types of the silane coupling agents is used. For the sealing material composition according to the present invention, the epoxy-silane coupling agent (B) and the amino-silane coupling agent (C) are used together. The reason that the effect of the present invention described above can be obtained is assumed as follows: In the sealing material composition according to the present invention, it is assumed that the epoxy-silane coupling agent (B) react with the thiol groups in the polymer (A), and an epoxy group of the epoxy-silane coupling agent (B) react with an amino group of the amino-silane coupling agent (C), while a silanol group of the epoxy-silane coupling agent (B) further react with a silanol group of the amino-silane coupling agent (C), resulting in formation of a complex three-dimensional crosslinked structure among each component (A) to (C). In addition, the silanol group of the epoxy-silane coupling agent and the silanol group of the amino-silane coupling agent can each form a bond with a functional group (e.g. hydroxyl group) on a surface of a material that is to be an adherend (e.g. glass). It is assumed that these reactions produce a denser crosslinked structure compared to that obtained by the conventional sealing material composition, resulting in the effect of the present invention described above.

In the present sealing material composition, N-2-(aminoethyl)-3-aminopropylmethyldimethoxysilane and/or N-2-(aminoethyl)-3-aminopropyltrimethoxysilane are preferably included as the amino-silane coupling agents. The configuration enhances the effect of the amino-silane coupling agent described above more significantly and makes it possible to obtain the sealing material with an excellent adhesion strength and durability.

### (D) Metal oxide

As a metal oxide, various metal compounds can be used as long as the effect of the present invention can be exhibited. Examples of the metal oxides include, lead (II) oxide, lead (IV) oxide, antimony (III) oxide, antimony (V) oxide, barium oxide, copper oxide, cobalt oxide, zinc oxide, iron oxide, calcium oxide, magnesium oxide, manganese dioxide, and the like. In addition to the metal oxides, metal peroxides and metal chromate salts can be used in combination. Examples of the metal peroxides include barium dioxide, lead dioxide, zinc dioxide, calcium dioxide, magnesium dioxide, and the like. Also, metal chromate salts such as zinc chromate, lead chromate, potassium chromate, ammonium chromate, and sodium chromate can be used. One type of these metal oxides may be used alone, or two or more types of these metal oxides may be used in a combination. Among these, manganese dioxide is preferable from the viewpoint of obtaining a sealing material having excellent adhesive strength and high durability against UV, heat and humidity. In particular, in the sealing material composition according to the present invention, the inclusion of the metal oxide (D) in the curing agent facilitates control of a curing rate of the thiol groups, and enables suitable control of workability and curability of the sealing material.

For the sealing material composition according to the present invention, from the viewpoint of obtaining the sealing material having superior durability against UV, heat, and humidity as well as excellent adhesion strength, a blending quantity of the curing agent relative to the main agent is preferably not less than 0.1 parts by mass, more preferably not less than 0.5 parts by mass, and even more preferably not less than 1 parts by mass of the curing agent, and preferably not more than 50 parts by mass, more preferably not more than 40 parts by mass, and even more preferably not more than 30 parts by mass of the curing agent, per 100 parts by mass of the main agent. Taking these into consideration, the content of the curing agent is preferably not less than 0.1 parts by mass and not more than 50 parts by mass, more preferably not less than 0.5 parts by mass and not more than 40 parts by mass, and even more preferably not less than 1 parts by mass and not more than 30 parts by mass, per 100 parts by mass of the main agent.

For the sealing material composition according to the present invention, from the viewpoint of obtaining the sealing material having superior durability against UV, heat, and humidity as well as excellent adhesion strength, a blending quantity of the epoxy-silane coupling agent (B) relative to the polymer (A) is preferably not less than 0.1 parts by mass, more preferably not less than 0.3 parts by mass, and even more preferably not less than 0.5 parts by mass of the epoxy-silane coupling agent (B), and preferably not more than 10 parts by mass, more preferably not more than 8 parts by mass, and even more preferably not more than 5 parts by mass of the epoxy-silane coupling agent (B), per 100 parts by mass of the polymer (A). Taking these into consideration, the content of the epoxy-silane coupling agent (B) is preferably not less than 0.1 parts by mass and not more than 10 parts by mass, more preferably not less than 0.3 parts by mass and not more than 8 parts by mass, and even more preferably not less than 0.5 parts by mass and not more than 5 parts by mass, per 100 parts by mass of the polymer (A).

For the sealing material composition according to the present invention, from the viewpoint of obtaining the sealing material having superior durability against UV, heat, and humidity as well as excellent adhesion strength, a blending quantity of the amino-silane coupling agent (C) relative to the polymer (A) is preferably not less than 0.1 parts by mass, more preferably not less than 0.3 parts by mass, and even more preferably not less than 0.5 parts by mass of the amino-silane coupling agent (C), and preferably not more than 10 parts by mass, more preferably not more than 8 parts by mass, and even more preferably not more than 5 parts by mass of the amino-silane coupling agent (C), per 100 parts by mass of the polymer (A). Taking these into consideration, the content of the amino-silane coupling agent (C) is preferably not less than 0.1 parts by mass and not more than 10 parts by mass, more preferably not less than 0.3 parts by mass and not more than 8 parts by mass, and even more preferably not less than 0.5 parts by mass and not more than 5 parts by mass, per 100 parts by mass of the polymer (A).

For the sealing material composition according to the present invention, from the viewpoint of obtaining the sealing material having superior durability against UV, heat, and humidity as well as excellent adhesion strength, a blending quantity of the metal oxide (D) relative to the polymer (A) is preferably not less than 1 parts by mass, more preferably not less than 3 parts by mass, and even more preferably not less than 5 parts by mass of the metal oxide (D), and preferably not more than 40 parts by mass, more preferably not more than 30 parts by mass, and even more preferably not more than 20 parts by mass of the metal oxide (D), per 100 parts by mass of the polymer (A). Taking these into consideration, the content of the metal oxide (D) is preferably not less than 1 parts by mass and not more than 40 parts by mass, more preferably not less than 3 parts by mass and not more than 30 parts by mass, and even more preferably not less than 5 parts by mass and not more than 20 parts by mass, per 100 parts by mass of the polymer (A).

For the sealing material composition according to the present invention, from the viewpoint of obtaining the sealing material having superior durability against UV, heat, and humidity as well as excellent adhesion strength, a blending quantity of the polymer (A) relative to the main agent is preferably not less than 5 mass%, more preferably not less than 10 mass%, and even more preferably not less than 15 parts by mass of the polymer (A), and preferably not more than 50 mass%, more preferably not more than 45 mass%, and even more preferably not more than 40 mass% of the polymer (A), relative to a total mass of the main agent. Taking these into consideration, the content of the polymer (A) relative to the main agent is preferably not less than 5 mass% and not more than 50 mass%, more preferably not less than 10 mass% and not more than 45 mass%, and even more preferably not less than 15 mass% and not more than 40 mass%.

For the sealing material composition according to the present invention, from the viewpoint of obtaining the sealing material having superior durability against UV, heat, and humidity as well as excellent adhesion strength, a blending quantity of the epoxy-silane coupling agent (B) relative to the main agent is preferably not less than 0.01 mass%, more preferably not less than 0.05 mass%, and even more preferably not less than 0.1 mass% of the epoxy-silane coupling agent (B), and preferably not more than 2 mass%, more preferably not more than 1 mass%, and even more preferably not more than 0.5 mass% of the epoxy-silane coupling agent (B), relative to a total mass of the main agent. Taking these into consideration, the content of the epoxy-silane coupling agent (B) relative to the main agent is preferably not less than 0.01 mass% and not more than 2 mass%, more preferably not less than 0.05 mass% and not more than 1 mass%, and even more preferably not less than 0.1 mass% and not more than 0.5 mass%.

For the sealing material composition according to the present invention, from the viewpoint of obtaining the sealing material having superior durability against UV, heat, and humidity as well as excellent adhesion strength, a blending quantity of the amino-silane coupling agent (C) relative to the main agent is preferably not less than 0.01 mass%, more preferably not less than 0.05 mass%, and even more preferably not less than 0.1 mass% of the amino-silane coupling agent (C), and preferably not more than 2 mass%, more preferably not more than 1 mass%, and even more preferably not more than 0.5 mass% of the amino-silane coupling agent (C), relative to a total mass of the main agent. Taking these into consideration, the content of the amino-silane coupling agent (C) relative to the main agent is preferably not less than 0.01 mass% and not more than 2 mass%, more preferably not less than 0.05 mass% and not more than 1 mass%, and even more preferably not less than 0.1 mass% and not more than 0.5 mass%.

For the sealing material composition according to the present invention, from the viewpoint of obtaining the sealing material having superior durability against UV, heat, and humidity as well as excellent adhesion strength, a blending quantity of the metal oxide (D) relative to the curing agent is preferably not less than 0.1 mass%, more preferably not less than 0.5 mass%, and even more preferably not less than 1 mass% of the metal oxide (D), and preferably not more than 20 mass%, more preferably not more than 10 mass%, and even more preferably not more than 5 mass% of the metal oxide (D), relative to a total mass% of the curing agent. Taking these into consideration, the content of the metal oxide (D) relative to the curing agent is preferably not less than 0.1 mass% and not more than 20 mass%, more preferably not less than 0.5 mass% and not more than 10 mass%, and even more preferably not less than 1 mass% and not more than 5 mass%.

For the sealing material composition according to the present invention, from the viewpoint of obtaining the sealing material having superior durability against UV, heat, and humidity as well as excellent adhesion strength, a blending quantity of the polymer (A) relative to the sealing material composition is preferably not less than 10 mass%, more preferably not less than 15 mass%, and even more preferably not less than 20 mass% of the polymer (A), and preferably not more than 50 mass%, more preferably not more than 45 mass%, and even more preferably not more than 40 mass% of the polymer (A), relative to a total mass% of the sealing material composition. Taking these into consideration, the content of the polymer (A) relative to the sealing material composition is preferably not less than 10 mass% and not more than 50 mass%, more preferably not less than 15 mass% and not more than 45 mass%, and even more preferably not less than 20 mass% and not more than 40 mass%.

For the sealing material composition according to the present invention, from the viewpoint of obtaining the sealing material having superior durability against UV, heat, and humidity as well as excellent adhesion strength, a blending quantity of the epoxy-silane coupling agent (B) relative to the sealing material composition is preferably not less than 0.05 mass%, more preferably not less than 0.1 mass%, and even more preferably not less than 0.2 mass% of the epoxy-silane coupling agent (B), and preferably not more than 5 mass%, more preferably not more than 3 mass%, and even more preferably not more than 1 mass% of the epoxy-silane coupling agent (B), relative to a total mass% of the sealing material composition. Taking these into consideration, the content of the epoxy-silane coupling agent (B) relative to the sealing material composition is preferably not less than 0.05 mass% and not more than 5 mass%, more preferably not less than 0.1 mass% and not more than 3 mass%, and even more preferably not less than 0.2 mass% and not more than 1 mass%.

For the sealing material composition according to the present invention, from the viewpoint of obtaining the sealing material having superior durability against UV, heat, and humidity as well as excellent adhesion strength, a blending quantity of the amino-silane coupling agent (C) relative to the sealing material composition is preferably not less than 0.05 mass%, more preferably not less than 0.1 mass%, and even more preferably not less than 0.2 mass% of the amino-silane coupling agent (C), and preferably not more than 5 mass%, more preferably not more than 3 mass%, and even more preferably not more than 1 mass% of the amino-silane coupling agent (C), relative to a total mass% of the sealing material composition. Taking these into consideration, the content of the amino-silane coupling agent (C) relative to the sealing material composition is preferably not less than 0.05 mass% and not more than 5 mass%, more preferably not less than 0.1 mass% and not more than 3 mass%, and even more preferably not less than 0.2 mass% and not more than 1 mass%.

For the sealing material composition according to the present invention, from the viewpoint of obtaining the sealing material having superior durability against UV, heat, and humidity as well as excellent adhesion strength, a blending quantity of the metal oxide (D) relative to the sealing material composition is preferably not less than 1 mass%, more preferably not less than 1.5 mass%, and even more preferably not less than 2 mass% of the metal oxide (D), and preferably not more than 10 mass%, more preferably not more than 7 mass%, and even more preferably not more than 5 mass% of the metal oxide (D), relative to a total mass% of the sealing material composition. Taking these into consideration, the content of the metal oxide (D) relative to the sealing material composition is preferably not less than 1 mass% and not more than 10 mass%, more preferably not less than 1.5 mass% and not more than 7 mass%, and even more preferably not less than 2 mass% and not more than 5 mass%.

The sealing material composition according to the present invention can include various additives. Examples of the additives include, a plasticizer, a filler such as calcium carbonate and carbon black, a reactive diluent, a curing catalyst such as tetraethylthiuram disulfide, a thixotropy-imparting agent, a silane coupling agent other than an epoxy-silane coupling agent (B) and an amino-silane coupling agent (C), a pigment, a dye, an anti-aging agent, an antioxidant, an antistatic agent, a flame retardant, a drying oil, an adhesion promoter, a dispersant, a dehydrating agent, an UV absorbent, and a solvent, which are generally used.

Examples of the filler include, organic and inorganic fillers such as pyrophyllite clay, kaolin clay, calcined clay, silica sand, fumed silica, calcined silica, precipitated silica, pulverized silica, molten silica, diatomaceous earth, calcium carbonate, iron oxide, zinc oxide, titanium oxide, barium oxide, magnesium oxide, magnesium carbonate, zinc carbonate, carbon black; and fatty acid treated products, resin acid treated products, fatty acid ester treated products, and fatty acid ester urethane treated products thereof; and the like.

Examples of the plasticizer include butyl benzyl phthalate, polypropyleneglycol, diisononyl phthalate (DINP), dioctyl phthalate (DOP), dibutyl phthalate (DBP); octyl adipate, isodecyl succinate; diethyleneglycol dibenzoate, pentaerythritol ester; butyl oleate, methyl acetyl ricinoleate, tricresyl phosphate, trioctyl phosphate; propylene glycol adipate polyester, butylene glycol adipate polyester; phenyl alkylsulfonate (e.g. Mesamoll manufactured by Bayer), and the like.

Suitable examples of the adhesion promoter include a silane coupling agent such as amino silanes, which is particularly excellent in improving adhesion toward a wet surface and further a widely used compound. Specific examples of the aminosilane include 3-aminopropyltrimethoxysilane, 3-aminopropyltriethoxysilane, 3-aminopropylmethyldimethoxysilane, 3-aminopropylethyldiethoxysilane, bistrimethoxysilylpropylamine, bistriethoxysilylpropylamine, bismethoxydimethoxysilylpropylamine, bisethoxydiethoxysilylpropylamine, N-2(aminoethyl)-3-aminopropyltrimethoxysilane, N-2(aminoethyl)-3-aminopropylmethyldimethoxysilane, N-2(aminoethyl)-3-aminopropyltriethoxysilane, N-2(aminoethyl)-3-aminopropylethyldiethoxysilane, and the like.

Both inorganic and organic pigments can be used as a pigment. Specific examples of the pigments include inorganic pigments such as carbon black, titanium dioxide, zinc oxide, ultramarine blue, red iron oxide, lithopone, lead, cadmium, iron, cobalt, aluminum, hydrochlorides, sulfates, and the like; and organic pigments such as azo pigments, copper phthalocyanine pigments, and the like.

The dye is not particularly limited, and a conventionally known dye can be used. Examples include a black dye, a yellow dye, a red dye, a blue dye, and a brown dye.

Examples of the antiaging agents include hindered phenol compounds and hindered amine compounds.

Examples of the antioxidant include butylhydroxytoluene (BHT) and butylhydroxyanisole (BHA).

Examples of the antistatic agent include quaternary ammonium salts; and hydrophilic compounds such as polyglycols and ethylene oxide derivatives.

Examples of the flame retardant include chloroalkyl phosphates, dimethyl-methyl phosphonates, bromine-phosphorus compounds, ammonium polyphosphates, neopentylbromide-polyethers, and brominated polyethers.

Examples of the adhesion promoter resin include terpene resins, phenol resins, terpene-phenol resins, rosin resins, xylene resins, epoxy resins, alkyl titanate groups, organic polyisocyanate and the like.

Examples of the stabilizers include fatty acid silyl ester, fatty acid amide trimethyl silyl compound and the like.

Dispersants are substances which make solids into fine particles and disperse them into a liquid and the examples thereof include sodium hexametaphosphate, sodium naphthalenesulfonate condensate, surfactants and the like.

The manufacturing method of the sealing material composition of the present invention is not particularly limited, and a conventionally known method can be used. For example, the sealing material compositions can be obtained by mixing the polymer (A), the epoxy-silane coupling agent (B), the amino-silane coupling agent (C), the metal oxide (D), and, optionally, the other components such as plasticizers, homogeneously at room temperature.

The sealing material composition according to the present invention is excellent in maintaining superior adhesion while controlling the curing rate and ensuring the good workability. Therefore, the sealing material composition according to the present invention can be suitably used as an adhesive for structural components in, for example, architecture, automobile and vehicle (bullet trains and trains), construction, electronics, aviation and space industries. The sealing material composition according to the present invention is particularly suitable for a secondary sealing material for a composite glass such as an aluminum sash.

FIG. 1 is a cross-sectional schematic view of a composite glass according to an embodiment of the present invention. It should be noted that the outer edge part of a composite glass is enlarged in FIG. 1, for convenience of explanation.

As illustrated in FIG. 1, the composite glass 10 according to the present embodiment includes a pair of glass plates 11 disposed facing each other at a predetermined spacing. The glass plates 11 are bonded together via a spacer 12 that is disposed at the outer edge part. Between the spacer 12 and the pair of the glass plates 11, a first sealing material 13 is provided, which seals a space between the glass plate 11 and the spacer 12 and a space between the glass plate 11 and the spacer 12.

At the outer edge of the composite glass 10, a concave portion is formed by the pair of the glass plates 11 and the spacer 12. In the concave portion, a second sealing material 14, which is configured to include the sealing material composition according to the present embodiment described above, is provided. By providing the second sealing material 14, a space between the glass plate 11 and the first sealing material 13, a space between the first sealing material 13 and the spacer 12, a space between the spacer 12 and the first sealing material 13 and a space between the first sealing material 13 and the glass plate 11 are sealed.

Thus, in the composite glass 10 according to the present embodiment, the outer edge of the composite glass 10 is sealed by the second sealing material including the sealing material composition according to the present embodiment described above. This configuration prevents a decrease in adhesion of the second sealing material 14, even if the second sealing material 14 has been exposed to UV in sunlight passed through the glass plates 11 and heat and moisture entered from the outer edge of the composite glass 10 into the space between the pair of the glass plates 11 for a long duration of time. Thus, the composite glass 10 with a high durability can be achieved. It should be noted that the present invention is not limited to the second sealing material 14 in the composite glass 10 and can be applied to various types of sealing material.

In addition, the sealing material composition of the present invention can be used as an adhesive for general office supply, medical use, carbon fibers and electronics materials, other than the adhesive use described above. Examples of use for adhesives for electronics materials include, an interlayer adhesive for a multiple layer circuit board such as a build-up circuit board, an adhesive for bonding optical components, an adhesive for bonding in an optical disk, an adhesive for implementing a printed circuit board, an adhesive for die-bonding, an adhesive for semiconductors such as an underfill, a BGA-reinforcing underfill, and adhesive for implementing an anisotropic conductive film (ACF), an anisotropic conductive paste (ACP) and the like.

Also, other than the usage described above, the sealing material composition according to the present invention can be used for an article for general usage, which uses thermosetting resin such as epoxy resin. Examples include, a coating material, a coating agent, a molding material including a sheet, a film, an FRP and the like, an insulating material, including a printed circuit board, a wire-coating and the like, a sealing agent, a sealing agent for a flat-panel display, a binding agent for fabrics and the like. Examples of the sealing agents include: a sealing agent used for potting, dipping or transfermolding of a capacitor, a transistor, a diode, a light-emitting diode, an IC, an LSI and the like; a sealing agent used for potting for COB, COF and TAB of an IC, an LSI and the like; an underfill for a flipchip and the like; a sealing for implementing IC packages such as QFP, BGA and CSP (including a reinforcing underfill) and the like.

### Examples

The present invention will be described in further detail with reference to the working examples and the comparative examples performed in order to clearly show the effect of the present invention. Note that the present invention is not limited by the working examples and comparative examples described below.

Working Examples 1 to 5 and Comparative Examples 1 to 8 The sealing material compositions were obtained by blending and mixing homogeneously the ingredients below at the compounded amounts listed in Table 1. Adhesion of the obtained sealing material compositions was evaluated. Each ingredient in the working examples and the comparative examples listed in Table 1 and Table 2 is listed below.
- Polysulfide polymer (Trade name: LP32, manufactured by Toray Industries, Inc.)
- Epoxy-silane coupling agent: γ-glycidoxypropyltrimethoxysilane (Trade name: A-187, manufactured by Momentive Performance Materials Inc.)
- Amino-silane coupling agent A: 3-aminopropyltriethoxysilane (Trade name: A-1100, manufactured by Momentive Performance Materials Inc.)
- Amino-silane coupling agent B: 3-aminopropyltrimethoxysilane (Trade name: A-1110, manufactured by Momentive Performance Materials Inc.)
- Amino-silane coupling agent C: N-2-(aminoethyl)-3-aminopropylmethyldimethoxysilane (Trade name: KBM-602, manufactured by Shin-Etsu Silicones)
- Amino-silane coupling agent D: N-2-(aminoethyl)-3-aminopropyltrimethoxysilane (Trade name: KBM-603, manufactured by Shin-Etsu Silicones)
- Amino-silane coupling agent E: 3-(N-phenyl)aminopropyltrimethoxysilane (Trade name: Y-9669, manufactured by Witco Corp.)
- Silane coupling agent A: tris(3-(trimethylethoxysilyl)propyl)isocyanurate (Trade name: Y-11597, manufactured by Witco Corp.)
- Silane coupling agent B: γ-mercapto-propyltrimethoxysilane (Trade name: A-189, manufactured by Momentive Performance Materials Inc.)
- Calcium carbonate (Trade name: Visco Light -MBP, manufactured by Shiraishi Calcium Co.)
- Plasticizer: Butyl benzyl phthalate (Trade name: Butyl benzyl phthalate, manufactured by Godo Co., Ltd.)
- Metal oxide: manganese dioxide (Trade name: deer first grade manganese dioxide, manufactured by Kanto Chemical Co., Inc.)
- Curing Catalyst: tetraethyl thiuram disulfide (Trade name: Nocceler TET, manufactured by Ouchi Shinko Chemical Industrial Co., Ltd.)
- Carbon black (Trade name: MA-600, manufactured by Mitsubishi Chemical)

### Evaluation of adhesion

The sealing material composition obtained was applied in a string shape to a surface of an adherend, on which a coating had been baked and cured beforehand at the coating and curing temperature described below, to a thickness of about 5 mm, then cured at 20°C and 50% RH for 7 days to obtain a cured product (a sealing material). Adhesion was evaluated as follows: a cured product was obtained by curing on a substrate at a predetermined temperature. Adhesion of the cured product was evaluated by a peel test, in which the cured product was pulled up in the 90° direction relative to the adhesion surface at a pulling velocity of 50 mm/min. The peel test above was performed for a sample of a cured product, which had been immersed in hot water of 50°C for 14 days and a sample of a cured product, which had been exposed to UV for 14 days at room temperature.

The evaluation of adhesion was done by visual inspection of a state of breakage in the peel test and graded according to the criteria below. When the state after the peel exhibited cohesive failure (CF) for almost the whole surface of the adhering surface, it was judged as good adhesion. It should be noted that CF means the state in which the adhesive remains intact on the coating surface after the breakage. The evaluation results are shown in Table 1 and Table 2 below.

Evaluation criteria shown in Table 1 are described below.
⊚: Cohesive failure for almost the whole surface of the adhering area.
○: Interfacial failure for less than 5% of the adhering area.
Δ: Interfacial failure for not less than 5% and less than 20% of the adhering area (adhesive absent on the coating surface after the breakage)
x: Interfacial failure for not less than 20% of the adhering area (adhesive absent on the coating surface after the breakage)

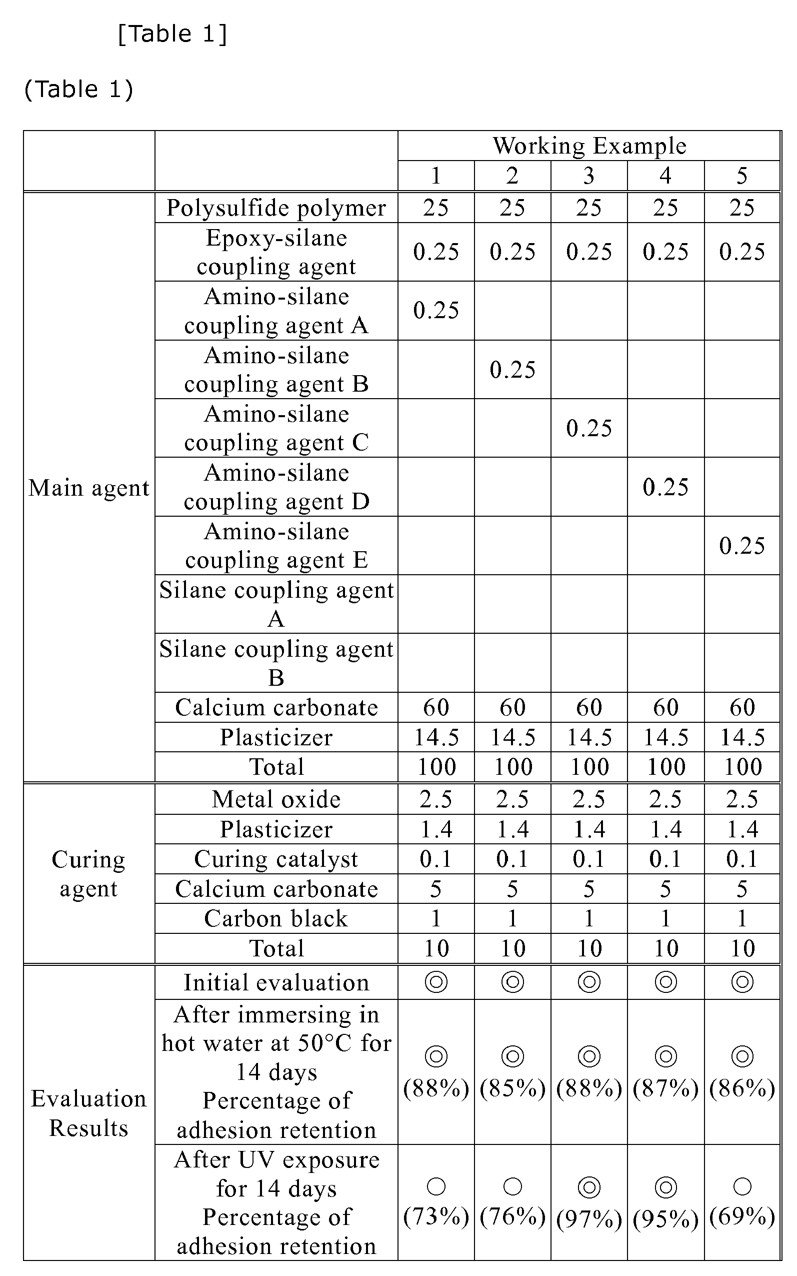

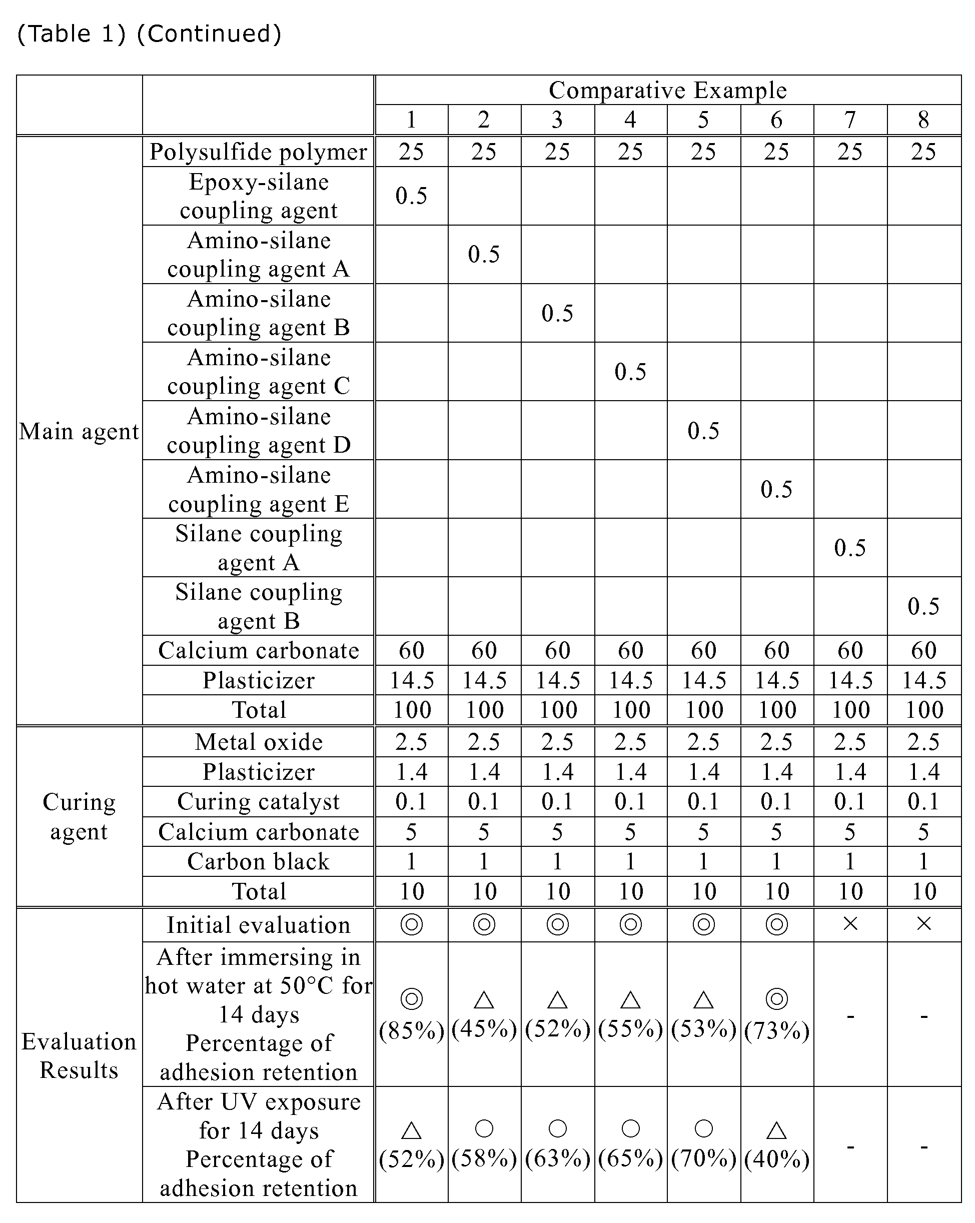

As understood from Table 1, the sealing material composition according to Working Examples 1 to 5, which included the polysulfide polymer that was a polymer having two or more thiol groups as a main agent, the epoxy-silane coupling agent, and the amino-silane coupling agent, exhibited a superior adhesion either after hot water immersion or after UV exposure. It is assumed that the results are based on the reactions between the polysulfide polymer, and the epoxy-silane coupling agent and the amino-silane coupling agent.

Compared with these examples, adhesion after UV exposure was distinctively worsened when the amino-silane coupling agent was not included (Comparative Example 1). Adhesion after hot water immersion and/or UV exposure was distinctively worsened even when the amino-silane coupling agent was included, but the epoxy-silane coupling agent was not included (Comparative Examples 2 to 8). These results indicate that the effect of the combined use of the epoxy-silane coupling agent and the amino-silane coupling agent was not obtained.

### Reference Signs List:

- 10: Multilayer glass panel
- 11: Glass plate
- 12: Spacer
- 13: First sealing material
- 14: Second sealing material

## Claims

1. A sealing material composition comprising:
(A) a polymer having two or more thiol groups in a molecule at not less than 10 mass% and not more than 50 mass%;
(B) an epoxy-silane coupling agent at not less than 0.05 mass% and not more than 5 mass%;
(C) an amino-silane coupling agent at not less than 0.05 mass% and not more than 5 mass%; and
(D) a metal oxide at not less than 1 mass% and not more than 10 mass%.

2. The sealing material composition according to claim 1, wherein N-2-(aminoethyl)-3-aminopropylmethyldimethoxysilane and/or N-2-(aminoethyl)-3-aminopropyltrimethoxysilane are included as the amino-silane coupling agent.

3. The sealing material composition according to claim 1 or 2, wherein the metal oxide is manganese dioxide.

4. A composite glass comprising the sealing material composition described in any one of the claims 1 to 3.
